# FASCICULE DE BREVET EUROPEEN

(11) **EP 1 259 145 B1**
(45) Date de publication et mention de la délivrance du brevet: **29.10.2003**
(21) Numéro de dépôt: 01909925.8
(22) Date de dépôt: 28.02.2001
(51) Int. Cl.: A47J 31/06

(54) **PORTE-FILTRE POUR CAFETIERE DU TYPE EXPRESSO**
FILTERTRÄGER FÜR KAFFEEMASCHINE VOM ESPRESSOTYP
FILTER-HOLDER FOR ESPRESSO-COFFEE MAKER

(30) Priorité: 02.03.2000 FR 0002713
(43) Date de publication de la demande: 27.11.2002
(73) Titulaire: SEB S.A., 69130 Ecully (FR)
(72) Inventeur: CHARLES, Patrick, F-65290 Louey (FR); LAFOND, Jean-Marie, F-65420 Ibos (FR); ROUCHES, Alexandre, F-65310 Horgues (FR)
(74) Mandataire: Kiehl, Hubert
(86) Numéro de dépôt international: FR0100585
(87) Numéro de publication internationale: WO01064088

(56) Documents cités:
- EP-A- 0 919 170
- WO-A-95/23544
- FR-A- 2 636 828
- FR-A- 2 771 614
- US-A- 5 638 740

## Description

La présente invention concerne un porte-filtre pour une machine à café du type expresso ou un appareil à préparer le café dans lequel l'eau chaude passe sous pression à travers un filtre contenant la mouture.

Une telle machine comporte un réservoir d'eau, une pompe, une chaudière, un piston et un porte-filtre. L'eau sous pression est chauffée par la chaudière et ainsi envoyée par la pompe à travers un piston injecteur dans la mouture contenue dans un porte-filtre d'où elle s'écoule sous forme d'infusion vers la tasse à café.

Le porte-filtre d'une cafetière du type expresso comprend un récipient destiné à recevoir la mouture de café, un filtre de fond retenant la mouture et au moins un orifice d'écoulement du café boisson vers la tasse. Un tel porte-filtre peut comporter avantageusement un dispositif de création de mousse ou de crème de café qui peut être intégré à la filtration ou dissocié de cette dernière.

On connaît dans l'état de la technique des dispositifs de confection de crème de café indépendamment de la filtration de cette dernière. Un tel dispositif est décrit dans le document EP 0 459 323. Ce document décrit un porte-filtre pour machine à café du type expresso comprenant une coupelle de réception d'un filtre à café dont le fond est perforé, et une chambre collectrice d'infusion comportant un couloir dont le débouché communique avec un entonnoir de distribution. Le dispositif de confection de mousse comprend d'une part une lame flexible, disposée transversalement au débouché, dont une extrémité est ancrée sur la paroi de fond de la chambre, et d'autre part une cloison agencée autour de la lame au niveau du débouché et s'étendant vers le bas de sorte que le jet d'infusion vienne se pulvériser sur la cloison en formant de la mousse. Toutefois, ce dispositif est difficile à mettre en oeuvre compte tenu des nombreuses pièces qu'il comporte.

Le document EP 0 682 902 décrit un porte-filtre pour expresso équipé d'un dispositif mousseur sous la forme d'un disque élastique encastré en sa périphérie à l'intérieur d'un récipient. Ce disque élastique est agencé sous un filtre portant la mouture et comporte un orifice central calibré muni d'encoches. La mousse est produite au moment de la détente de l'infusion en contact avec l'air après pulvérisation à travers ledit orifice calibré. Néanmoins, on a constaté que cette réalisation était dépendante de la perte de charge après filtration de l'infusion et que donc, pour des moutures très fines, l'orifice calibré n'assure pas suffisamment de mousse.

Le document FR 2 771 614 au nom de la demanderesse décrit un autre porte-filtre à dispositif de confection de crème pour cafetière expresso. Dans le dispositif proposé, la paroi filtrante est séparée des orifices d'écoulement du café par un disque élastique comportant sur son pourtour une lèvre oblique vers le bas élastiquement déformable radialement sous l'effet de la pression entre une position dans laquelle la lèvre empêche le passage du café vers les orifices d'écoulement et une position dans laquelle elle libère ce passage. Fonctionnant à satisfaction, on s'est quand même aperçu que les orifices de la paroi filtrante étaient partiellement ou totalement obstrués par les grains d'une mouture très fine ou dans le cas d'un tassage excessif de la mouture par l'utilisateur.

On connaît également, du document WO97/26815, un porte-filtre pour une machine à café du type expresso comprenant une coupelle de réception d'un filtre à café perforé, un corps disposé en dessous du filtre, une chambre collectrice d'infusion débouchant dans le couloir dont le débouché communique avec l'entonnoir de distribution, et un dispositif de confection de mousse. Le couloir s'étend annulairement autour d'un bossage central ménagé sur le corps. Le dispositif de confection de mousse comporte un joint élastique annulaire agencé autour du bossage obturant le débouché du couloir et déformable par expansion radiale pour former au moins un passage d'écoulement de l'infusion. Outre une construction complexe de ce dispositif, avec des longs circuits du café boisson dans le porte filtre pouvant engendrer un refroidissement de ce dernier, on a constaté que le laminage de l'infusion entre le joint déformé radialement par expansion et lesdits passages ne permettait pas d'obtenir une bonne qualité de crème. En effet l'expansion radiale du joint ne permet pas de suivre les variations fines de la pression ou de la perte de charge existante dans la chambre collectrice d'infusion.

Le but de la présente invention est de remédier aux inconvénients précités et de proposer un porte-filtre pour une cafetière du type expresso équipé d'un dispositif de confection de crème de café de fonctionnement efficace et fiable en fonctionnement quelle que soit la granulométrie et la quantité de mouture dans le porte-filtre.

Un autre but de cette invention est un dispositif de confection de crème de café intégré à un porte-filtre qui soit de construction simple tout en permettant d'obtenir la pression nécessaire à l'extraction d'arôme du café et en même temps une crème de café abondante, dense, persistante et colorée. Ce dispositif doit assurer également l'obtention d'un gâteau de marc de café compact, sec, facile à éjecter.

Un but supplémentaire de cette invention est de réaliser un porte-filtre facile à mettre en oeuvre qui permet de réduire les coûts de fabrication, comportant des pièces en matière plastique moulées, faciles à industrialiser pour une production en grande série.

Ces buts sont réalisés dans un porte-filtre pour une cafetière du type expresso comprenant un récipient destiné à recevoir la mouture de café dont le fond comporte au moins un orifice pour l'écoulement du café et au-dessus duquel s'étend une paroi filtrante pour retenir la mouture de café ainsi qu'au moins un joint annulaire en matière élastique situé entre la paroi filtrante et ledit fond, du fait que ladite paroi filtrante comporte plusieurs orifices ayant un diamètre apte à retenir les grains très fins de mouture, et du fait qu'un joint est agencé autour de chaque orifice d'écoulement, la partie inférieure du joint étant solidaire du fond, la partie supérieure du joint étant normalement en appui contre la paroi filtrante de manière à obturer le passage du liquide traversant la mouture vers l'orifice d'écoulement, ce joint se déformant à une valeur prédéterminée de la pression du liquide par compression sensiblement perpendiculairement à la paroi filtrante de telle sorte à ouvrir le passage du liquide vers l'orifice d'écoulement.

Ainsi, le café boisson est obtenu en deux étapes : une première étape de filtration du mélange eau - mouture réalisée par la paroi filtrante et une deuxième étape de montée en pression obtenue par un joint annulaire élastiquement déformable par compression perpendiculairement à la paroi filtrante.

La paroi filtrante selon l'invention comporte un nombre suffisamment important d'orifices filtrants, de dimensions prédéterminées de façon à ce que l'infusion en passant à travers cette paroi présente une perte de charge quasi constante quelle que soit la finesse de la mouture et quelle que soit la force de tassage de la mouture dans le porte-filtre. En effet, les orifices nombreux de la paroi filtrante ne sont jamais tous obstrués par la mouture, même si cette dernière est extrêmement fine.

Le joint annulaire prend appui, en début d'opération d'extraction du café, contre la paroi filtrante surjacente de manière à obturer le passage de l'infusion filtrée vers l'orifice d'écoulement à l'extérieur du porte-filtre. Ainsi, il permet d'obtenir une pression suffisante dans le récipient du porte-filtre pour extraire tout l'arôme de la mouture de café. A une valeur prédéterminée de la pression, le joint est comprimé selon l'axe du récipient de manière à ce qu'il permette à l'infusion de passer entre la paroi filtrante et la partie comprimée du joint. Ainsi, le jet d'infusion formé est orienté parallèlement à la paroi filtrante en étant laminé entre cette dernière et la partie supérieure du joint avant de traverser les orifices d'écoulement de l'infusion à l'extérieur du porte-filtre. Par conséquent, la crème se forme par effet Venturi au niveau du passage créé, cette crème qui se retrouve entièrement dans le conduit de sortie du café boisson et est recueillie dans la tasse de café.

Le joint annulaire élastiquement déformable comprimé axialement sous l'effet de la pression a le rôle d'un clapet régulateur de pression, il permet d'obtenir donc une régulation de la pression à l'intérieur du porte-filtre, car il s'ouvre plus ou moins en fonction de la valeur de cette dernière. Il permet également de laminer l'infusion sur tout le pourtour de ce joint, ce qui a pour résultat de créer plus de crème dans l'espace avoisinant l'orifice d'écoulement. Cette crème ainsi que l'infusion arrivent directement dans la tasse de café, ce qui permet d'obtenir un café à la bonne température et une crème dense et riche.

Utilement, le joint présente ùne dureté shore comprise entre 50 et 80. En fonction de cette dureté, l'écartement entre la paroi filtrante et le fond du récipient peut être compris entre 0.5 mm et 2 mm.

Avantageusement, la paroi filtrante comporte un nombre d'au moins 400 orifices de diamètre compris entre 100 et 500 µm, de préférence 300 µm.

Ainsi, on obtient une perte de charge sensiblement constante pour toutes les valeurs de la granulométrie de la mouture, ce qui permet également un temps d'obtention de l'infusion et donc de passage de l'eau à travers la mouture constant quelle que soit la finesse de la mouture. Ceci concourt à l'obtention d'une infusion riche en arôme et également à une quantité et qualité de crème constantes pour tous les types de moutures.

Selon un mode préféré de réalisation de l'invention, le porte-filtre comporte deux joints annulaires agencés chacun concentriquement à deux orifices d'écoulement, disposés côte à côte de part et d'autre de l'axe de symétrie du fond.

On obture ainsi les deux orifices d'écoulement avec deux joints annulaires agencés concentriquement à chacun des orifices. Le diamètre intérieur de chaque joint étant, de préférence, sensiblement identique à celui de l'orifice d'écoulement, le joint isole cet orifice du reste de la chambre collectrice d'infusion et il laisse s'accumuler l'infusion derrière lui. Cet agencement augmente la capacité de cette chambre et laisse à l'infusion un temps suffisant pour se charger d'arômes. Au moment où la pression dans la chambre d'infusion devient supérieure à une valeur prédéterminée, la partie supérieure saillante de chaque joint se déforme sur son pourtour et laisse passer le liquide vers l'orifice d'écoulement.

Avantageusement, les deux joints annulaires sont reliés ensemble par un support commun.

Ceci permet d'avoir des moyens uniques de fixation et/ou de guidage, par rapport au fond du récipient contenant la mouture, pour les deux joints, ces moyens étant agencés notamment au centre de leur support commun.

Avantageusement, la paroi filtrante du porte-filtre de l'invention présente des orifices en correspondance avec le diamètre intérieur de la partie supérieure du joint.

Ainsi, ces orifices assurent un échappement permettant la décompression du porte-filtré en fin d'élaboration du café. Ceci permet, d'une part, d'éviter les éventuels giclements dues à la détente de la pression résiduelle au moment de l'ouverture du porte-filtre et, d'autre part, d'éliminer, à travers lesdits orifices, l'eau restante dans le marc de café en fin d'élaboration et, par conséquent, d'obtenir un gâteau de marc plus sec, facilement éjectable.

De préférence, le rapport entre la surface équivalente desdits orifices et le diamètre intérieur du joint est calculé de manière à minimiser le passage direct de l'infusion du récipient à l'intérieur du joint vers les orifices d'écoulement lors de l'extraction du café.

Ainsi, une surface de passage trop importante desdits orifices pourrait privilégier le passage de l'infusion à travers ces orifices directement dans l'orifice d'évacuation et d'ici vers la tasse de café, ce qui pourrait donc court-circuiter le joint et, par conséquent, ne plus obtenir de crème dans le café boisson. A l'inverse, s'il y a un nombre trop petit desdits orifices en correspondance avec le diamètre intérieur du joint, la probabilité d'obstruction de ces derniers par les grains de mouture est plus forte et, à la limite on pourrait ne plus obtenir l'effet escompté de décompression et d'évacuation d'eau. A titre indicatif et nullement limitatif, on pourrait prévoir un nombre d'orifices compris entre 5 et 15 ayant les dimensions précitées, pour un diamètre intérieur de la partie supérieure du joint compris entre 3 et 6 mm.

Avantageusement, le joint annulaire est du type étagé comportant une base plane annulaire continuée en sa partie supérieure par une partie généralement en forme de tore.

Ainsi, la base plane permet d'avoir une bonne surface d'appui contre le fond du récipient contenant la mouture, pendant que la partie supérieure en forme de tore prend contact avec la paroi filtrante et permet d'avoir une bonne étanchéité tout autour de l'orifice d'écoulement du café, tout en facilitant l'écartement de cette surface par rapport à ladite paroi à partir d'une certaine pression.

Selon un mode avantageux de réalisation du joint annulaire, la valeur de l'épaisseur de la partie toroïdale est inférieure ou égale à la hauteur de la base annulaire.

Ceci a pour effet le fait que, à partir d'une certaine valeur de la pression, la partie toroïdale qui assurait l'étanchéité, se déforme en premier par compression axiale, selon une direction perpendiculaire à la paroi filtrante. Ceci est d'autant plus marqué lorsque le joint prend appui le long de sa partie intérieure sur des parois rigides. Par conséquent, le jet d'infusion formé suit une direction horizontale, en étant laminé entre la paroi filtrante et la partie toroïdale du joint sur tout son pourtour. Ensuite, le jet d'écoulement devient vertical en passant à travers les orifices d'écoulement et les tubulures verticales du porte-filtre vers les tasses de café, ce qui a pour résultat de casser les turbulences et d'obtenir une crème homogène et fine dans la tasse.

De préférence, la partie supérieure du joint comporte une lèvre périphérique orientée vers la partie intérieure du joint.

Ainsi, la lèvre du joint est orientée dans le sens d'écoulement du liquide et elle permet de mieux contrôler la force d'ouverture du joint, elle permet également de mieux suivre les éventuelles variations de la pression à l'intérieur du porte-filtre. Notamment, les dimensions de cette lèvre étant assez réduites par rapport à l'épaisseur de la partie supérieure du joint, la résultante de l'effort créé par la pression sur un joint de ce type est orientée majoritairement selon la direction axiale du joint, perpendiculairement à la paroi, une composante axiale étant présente en quantité négligeable et surtout en début de déformation. Un joint de ce type subit donc lui aussi une déformation par compression axiale.

Dans une variante de réalisation de l'invention, on prévoit au moins une chicane au long des parois de la tubulure d'évacuation du café qui communique avec l'orifice d'évacuation prévu dans le fond du porte-filtre.

Cette chicane a le rôle de créer une diminution de la vitesse du jet d'infusion obtenu dans les tubulures d'évacuation du café ainsi que de calmer les éventuelles turbulences résultant du passage du liquide dans les tubulures. Ceci a pour résultat d'empêcher les giclements du café boisson dans la tasse et d'obtenir une crème plus dense dans le café boisson.

Avantageusement, la chicane comporte une paroi agencée sensiblement perpendiculairement à la direction d'écoulement de l'infusion.

Ainsi, la paroi s'oppose à la circulation du liquide à l'intérieur de la tubulure et elle diminue efficacement la vitesse de ce dernier. Le café boisson s'écoule à travers un passage formé entre cette paroi et la surface intérieure de la tubulure, ce qui a pour conséquence d'obtenir un jet laminaire d'infusion à la sortie, dans la partie inférieure de la tubulure, juste avant le passage dans la tasse de café.

D'autres caractéristiques et avantages de l'invention apparaîtront plus clairement à la lumière de la description et des dessins qui suivent, illustrant, à titre d'exemples non limitatifs, des modes de mise en oeuvre de l'invention.

Ainsi, référence est faite aux figures 1 à 6, où :
- la figure 1 représente une vue en coupe axiale d'un porte-filtre selon un premier mode de réalisation de l'invention ;
- la figure 2 représente une vue en coupe axiale d'un porte-filtre selon une première variante du second mode de réalisation de l'invention ;
- la figure 3 représente un détail à échelle agrandie de la vue représentée à la figure 2 ;
- la figure 4 montre une vue de dessus du joint représenté à la figure 3 ;
- la figure 5 représente une vue en coupe axiale d'une variante constructive du porte-filtre représenté à la figure 2 ;
- la figure 6 montre une vue en coupe axiale d'une deuxième variante du second mode de réalisation ;
- la figure 7 représente un détail à échelle agrandie d'une troisième variante du second mode de réalisation de l'invention.

Le porte-filtre de l'invention est à utiliser dans une machine à café du type expresso dans laquelle la mouture 8 de café est traversée par l'eau chaude sous pression.

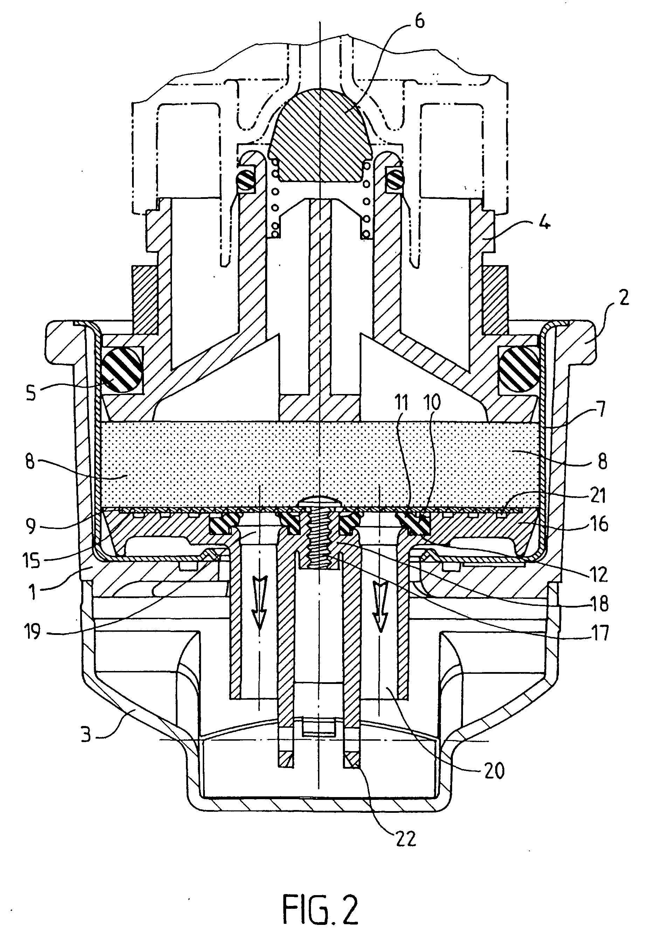

Comme mieux visible sur la figure 2, le porte-filtre comprend une poignée solidaire d'une coupelle de traitement 1. La coupelle 1 est montée, de manière amovible, par des moyens de fixation du type rampe 2 coopérant avec des rampes correspondantes dans le corps de la machine, sous des moyens d'arrivée 4 du liquide. La machine comprend en outre un socle sur lequel est posée une tasse destinée à recueillir la boisson s'écoulant par des conduits d'évacuation 20 du récipient de traitement 1.

Une chaudière non représentée dans les figures est prévue pour chauffer le liquide, notamment l'eau, à une température prédéterminée et le conduire sous pression jusqu'à la coupelle de traitement 1 par l'intermédiaire des moyens d'arrivée d'eau 4. Une soupape à ressort 6 assure l'ouverture afin de permettre le passage du liquide de la chaudière vers les moyens d'arrivée d'eau 4 à partir d'une valeur donnée de la pression du liquide, ainsi que la fermeture au moment où la pression est descendue en-dessous de cette valeur. L'étanchéité entre les moyens d'arrivée d'eau 4 et la mouture 8 retenue dans le récipient ou chemise 7 à l'intérieur de la coupelle 1 est réalisée par un joint d'étanchéité torique entourant l'extrémité inférieure des moyens d'arrivée d'eau 4.

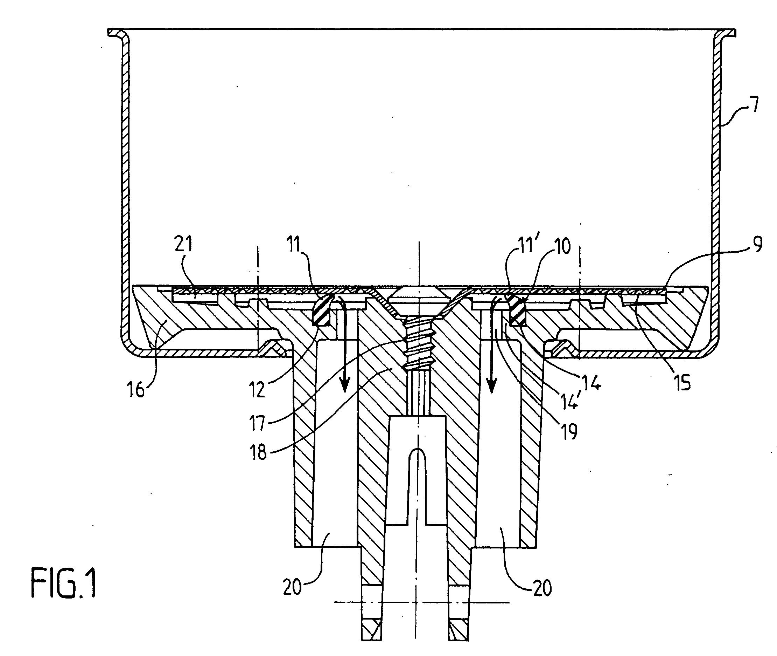

Comme illustré sur les figures 1 et 2, la coupelle 1 du porte-filtre comporte un récipient intérieur ou chemise 7 ayant sensiblement la forme de la partie intérieure de la coupelle 1 et il est directement fixé à cette dernière. Dans la partie inférieure du récipient 7 est disposé un support ou fond 16. Le support 16 est monté coulissant par rapport au récipient 7 en vue de l'extraction du gâteau de marc restant en fin d'élaboration de café. Dans ce but, le fond 16 comporte une fourche 22 reliée à un mécanisme d'actionnement en un déplacement de translation verticale de cette dernière, mécanisme situé à l'intérieur de l'enveloppe de protection 3 du porte-filtre.

Une paroi filtrante 9 est agencée à l'intérieur du récipient 7 et elle prend appui sur la surface supérieure du fond 16. Des canaux ou creusures sont pratiqués dans la partie supérieure du fond 16 de manière à former une chambre collectrice d'infusion 21 entre cette dernière et la paroi 9. La paroi filtrante 9 est fixée en sa partie centrale au fond mobile 16 moyennant, par exemple, une vis de fixation 17. Cette paroi, généralement en forme de disque, a le rôle de retenir la mouture dans le récipient 7 et de laisser passer seulement l'infusion à travers ses orifices filtrants 15.

Les orifices filtrants 15 ont un diamètre suffisamment petit pour filtrer même les moutures très fines et ils sont suffisamment nombreux, en étant sensiblement uniformément distribués, de manière à ce qu'ils ne soient pas tous complètement obstrués par les grains fins de mouture et/ou par un tassage excessif de la mouture par l'utilisateur.

A titre d'exemple indicatif et non limitatif, on prévoit environ 400 orifices 15 de diamètre d'environ 300 µm uniformément distribués sur la surface d'un disque 9 ayant un diamètre d'environ 50 mm. Le disque 9 peut être réalisé, par exemple, en un acier inoxydable alimentaire, les orifices 15 étant obtenus par poinçonnage d'une face du disque et ensuite par rectification de la face opposée qui doit être lisse et plane. Les essais ont montré qu'un tel type de paroi filtrante assurait une perte de charge constante indépendamment de la finesse de la mouture utilisée et de la force de serrage du porte-filtre autour de l'embout comprenant les moyens d'arrivée d'eau 4.

La paroi filtrante 9 est séparée du fond coulissant 16 par un organe 10 en une matière élastique et ayant sensiblement la forme d'un joint annulaire. Ce joint 10 est agencé autour de la partie centrale 18 du fond 16 en étant guidé et retenu par sa partie inférieure 12 dans une rainure de forme correspondante pratiquée dans le support ou fond 16. La surface intérieure 14 du joint 10 prend appui sur des proéminences de forme correspondante 14' du fond 16, ce qui assure le guidage en son mouvement axial lorsqu'un effort est appliqué en sa partie supérieure 11. Sa partie supérieure 11 prend appui contre la paroi filtrante 9. La fixation de la paroi 9 au fond coulissant 16 maintient le joint 10 en contact avec ledit fond 16. Le joint 10 est disposé autour des orifices d'écoulement 19 de l'infusion de manière à les isoler et à empêcher ainsi le passage de l'infusion à travers ces orifices. Les orifices 19 sont pratiqués dans le fond 16, de part et d'autre de la partie centrale 18 du fond 16 et ils mettent en communication l'infusion filtrée avec la tasse à café via les tubulures ou conduits d'évacuation verticaux 20.

Selon un premier mode de réalisation de l'invention représenté à la figure 1, le joint 10 a une forme annulaire dont la base 12 est solidaire du fond 16 et la partie supérieure 11 présente une lèvre 11' sur son pourtour. La lèvre 11' est orientée vers l'intérieur du joint 10, respectivement vers la partie centrale ou bossage 18 du fond 16.

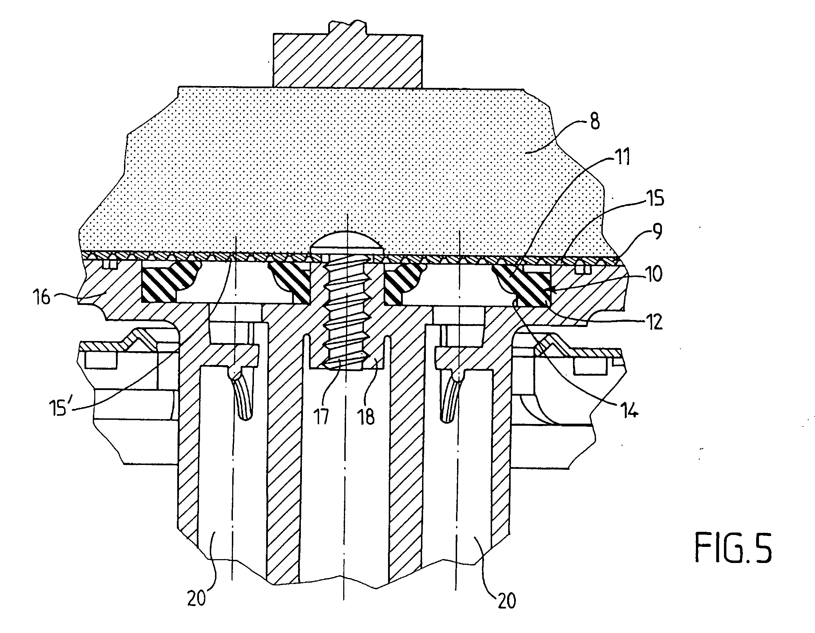

Selon un deuxième mode de réalisation de l'invention, le joint 10 a la forme d'un double joint annulaire. Un tel double joint 10 est mieux visible à la figure 4 et il comporte une base plane 12 de forme généralement ovale au centre de laquelle est pratiqué un orifice 13. Cet orifice sert d'orientation et de guidage du joint 10 par rapport au fond 16, notamment autour de la partie centrale 18 de ce dernier. Deux couronnes 11 agencées symétriquement par rapport à l'orifice 13 font saillie par rapport à la base 12 du joint 10.

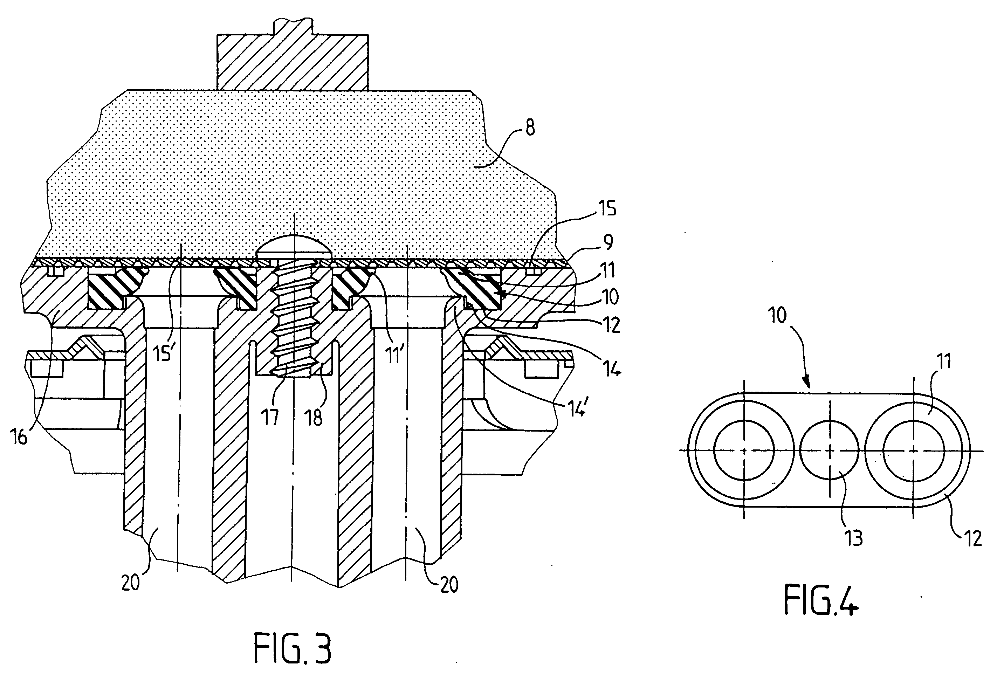

Selon une première variante du deuxième mode de réalisation de l'invention et qui est mieux visible aux figures 2 et 3, chaque couronne ou partie supérieure 11 du joint 10 présente une lèvre périphérique sur son pourtour, lèvre orientée vers l'intérieur de chaque couronne.

Ainsi, le joint représenté aux figures 1 à 3, a le rôle d'empêcher le passage de l'infusion de la chambre 21 vers les orifices d'écoulement 19 tant que la pression dans la chambre 19 reste inférieure à une valeur prédéterminée. Une fois cette valeur de la pression atteinte, la partie supérieure 11 du joint 10 se déforme par compression axiale, donc parallèlement à son axe vertical, sensiblement perpendiculairement à la paroi filtrante 9, en laissant ouvert un passage pour l'infusion à l'intérieur du joint 10 et qui passe ensuite à travers l'orifice d'écoulement 19 vers la tasse de café. Le jet d'infusion obtenu à l'intérieur du joint 10 est sensiblement horizontal. Du au fait que le joint 10 présente une lèvre périphérique 11', l'effort exercé par la pression régnant dans la chambre d'infusion 21 sur ce dernier présente une composante majoritairement axiale, ainsi qu'une faible composante radiale. La résultante de ces composantes est dirigée sensiblement parallèlement à l'axe vertical du joint 10. Par conséquent, le jet d'infusion obtenu est donc orienté sensiblement parallèlement à la paroi 9. Un tel jet permet d'obtenir un très bon laminage de l'infusion entre la paroi filtrante 9 et la lèvre 11' du joint 10 et, par conséquent, une bonne émulsion air - infusion à l'intérieur du joint 10 et dans les conduits d'évacuation 20.

Dans une variante constructive représentée à la figure 5, on remarque que le joint 10 est agencé dans un espace creux de forme correspondante pratiqué dans le fond 16 et que la surface intérieure 14 de ce joint 10 n'est plus supportée par des proéminences formant bossage pour ledit joint. Dans la réalisation de la figure 2, on observe que les proéminences 14' guident la partie interne 14 du joint 10 et limitent la course de ce dernier qui, en se déformant vient buter sur la partie frontale desdites proéminences. Ainsi, dans le cadre de cette invention, le joint 10 est agencé avec sa surface intérieure 14 autour des proéminences 14' bordant un orifice d'écoulement 19, proéminences pouvant, à la limite, être supprimées afin d'obtenir une valeur maximale de la déformation du joint 10.

Après de nombreux essais en laboratoire, on s'est aperçu que la hauteur des proéminences 14' déterminant la valeur de la déformation du joint 10, a une influence directe sur la finesse de la crème de café obtenue. Ainsi, en choisissant la valeur de la hauteur des proéminences 14', on obtient une course ou valeur prédéterminée de la déformation par compression axiale de la partie supérieure 11 du joint 10, et l'on obtient une qualité prédéterminée de la crème dans la tasse de café.

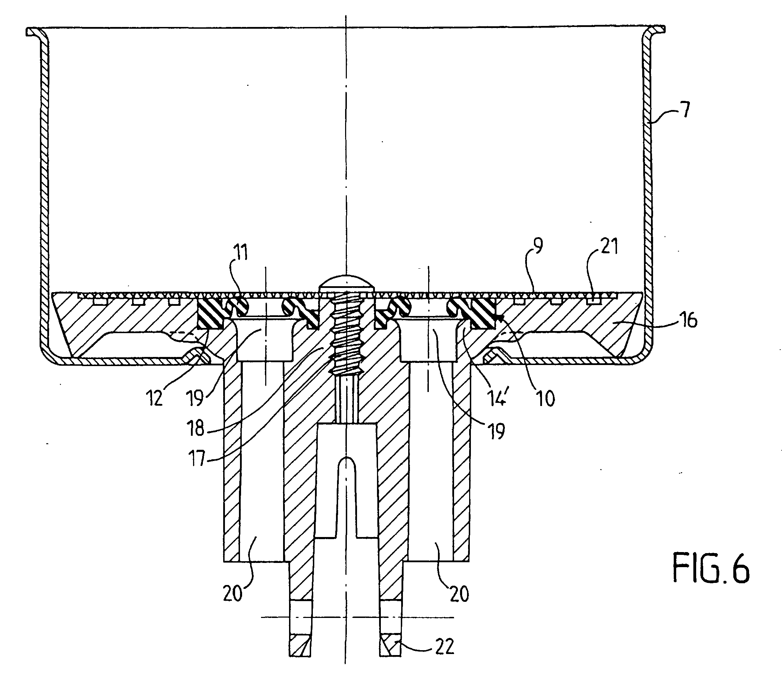

Dans une deuxième variante du même mode de réalisation et qui est visible à la figure 6, la couronne 11 est de forme toroïdale.

La déformation du joint par compression dans une direction parallèle à son axe vertical est encore mieux constatée dans ce cas, le flux d'infusion étant encore mieux laminé entre la partie toroïdale 11 et la paroi filtrante 9.

Le joint 10 est réalisé en un matériau élastomère, par exemple en un caoutchouc silicone par une technique de moulage. A titre d'exemple, la valeur du diamètre intérieur de chacune des couronnes 11 est comprise entre 3 et 6 mm, de préférence 4 mm. La valeur de son diamètre extérieur est, notamment, comprise entre 7 et 10 mm, de préférence 8 mm, pour une hauteur totale du joint d'environ 3 mm, la hauteur de la couronne 11 et celle de la basé 12 étant sensiblement égales.

Dans une autre variante non représentée aux dessins, aucun orifice filtrant n'est présent dans la partie correspondant au diamètre intérieur du joint 10, de telle sorte que ce joint isole complètement les orifices d'écoulement 19 de la chambre collectrice d'infusion 21.

Cependant, des essais ont montré que la présence de quelques orifices filtrants 15' en correspondance avec l'intérieur du disque 10, et donc avec les canaux d'évacuation 20 du café, était souhaitable. Ces orifices 15' ont le rôle d'assurer une bonne décompression du porte-filtre en fin d'élaboration du café. Il a été également constaté que les orifices 15' contribuaient aussi à évacuer l'éventuel reliquat d'eau existant dans le gâteau de marc après l'extraction du café, ce qui rendait plus facile l'éjection de ce dernier.

En fonctionnement, l'eau chaude sous pression traverse la mouture de café 8 reposant sur la paroi filtrante 9 et se charge des extraits et d'arôme de café. La paroi filtrante 9 retient la mouture 8 et laisse passer le café boisson qui remplit l'espace de la chambre collectrice d'infusion 21 entourant le joint 10. Le joint 10 empêche, de préférence d'une manière totalement étanche, l'écoulement du café par les orifices 19.

Lors du fonctionnement de la cafetière, la pression hydraulique monte progressivement dans la chambre collectrice d'infusion 21. Lorsque la pression atteint une valeur prédéterminée, par exemple 6 bars, la lèvre 11' ou la partie toroïdale 11 du joint 10 se déforme axialement par compression et laisse passer le café boisson par les orifices 19 par lesquels il s'écoule vers le bas, à travers les tubulures 20. En passant par l'ouverture créée entre la paroi filtrante 9 et la partie supérieure 11 du joint, le jet de café boisson est laminé. Ce laminage crée une brusque dépression et une émulsion qui engendre une crème abondante, onctueuse et persistante dans l'espace d'écoulement du café boisson.

L'écoulement du café boisson entre le joint 10 et la paroi 9 est horizontal. Ensuite, l'écoulement devient vertical au travers des orifices 19, ce qui a pour résultat de casser les turbulences et d'obtenir deux jets laminaires verticaux dans une direction sensiblement parallèle à l'axe de l'un ou l'autre des conduits d'écoulement 20, dans le sens indiqué par les flèches à la figure 2.

En fin d'extraction du café, la coupelle 1 est désolidarisée de la machine à café. La galette de marc qui se trouve à l'intérieur du récipient 7 est éjectée en actionnant le mécanisme de propulsion vers le bord supérieur du récipient 7 du fond coulissant 16, ce qui permet de retirer aisément la mouture de café après utilisation.

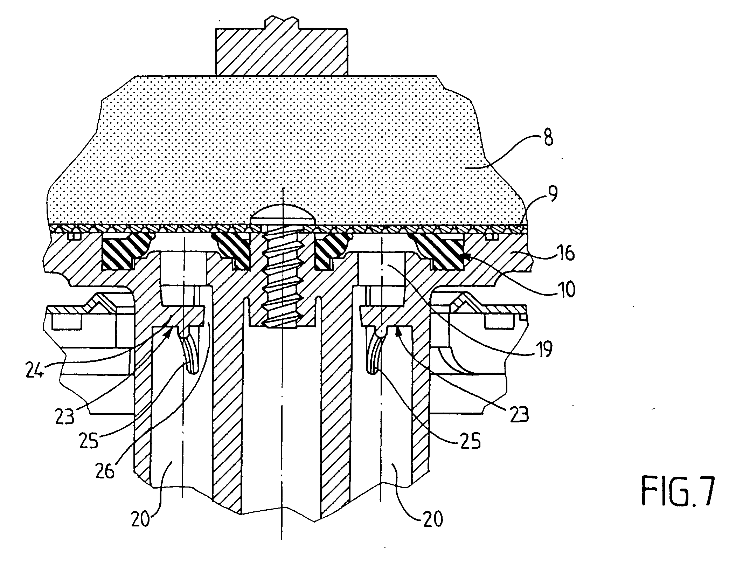

Dans une autre variante du deuxième mode de réalisation de l'invention représentée à la figure 7, les tubulures ou conduits d'évacuation 20 du café boisson comportent sur leurs parois internes un déflecteur ou chicane 23. Ce déflecteur 23 comporte essentiellement une paroi horizontale 24, agencée perpendiculairement à la direction d'écoulement du café boisson dans les tubulures 20. La paroi horizontale 24 a le rôle de calmer encore davantage les éventuelles turbulences restantes ou qui se créent dans les tubulures 20. Elle oriente donc le jet de café vers l'orifice de passage 26 où il est encore une fois laminé entre la paroi 24 du déflecteur 23 et la surface interne du conduit 20.

Avantageusement, la chicane ou déflecteur 23 peut comporter une paroi verticale 25 formant entonnoir dans le prolongement vers le bas de la paroi horizontale 24, sensiblement perpendiculairement à cette dernière. Le jet de café boisson obtenu est laminaire et vertical, sensiblement parallèle à l'axe vertical des tubulures 20.

L'invention n'étant pas limitée aux exemples de réalisation décrits, des nombreuses modifications peuvent lui être apportées sans sortir du cadre de ses revendications.

## Revendications

1. Porte-filtre pour une cafetière du type expresso comprenant un récipient (7) destiné à recevoir la mouture de café (8) dont le fond (16) comporte au moins un orifice (19) pour l'écoulement du café et au-dessus duquel s'étend une paroi filtrante (9) pour retenir la mouture de café ainsi qu'au moins un joint annulaire (10) en matière élastique situé entre la paroi filtrante (9) et ledit fond (16), **caractérisé en ce que** ladite paroi filtrante (9) comporte plusieurs orifices (15) ayant un diamètre apte à retenir les grains très fins de mouture, et **en ce que** ledit joint (10) est agencé autour de chaque orifice d'écoulement (19), la partie inférieure (12) du joint étant solidaire du fond (16), la partie supérieure (11) du joint étant normalement en appui contre la paroi filtrante (9) de manière à obturer le passage du liquide traversant la mouture vers l'orifice d'écoulement (19), ce joint se déformant à une valeur prédéterminée de la pression du liquide par compression sensiblement perpendiculairement à la paroi filtrante (9) de telle sorte à ouvrir le passage du liquide vers l'orifice d'écoulement (19).

2. Porte-filtre selon la revendication 1, **caractérisé en ce que** le joint (10) présente une dureté shore comprise entre 50 et 80.

3. Porte-filtre selon la revendication 1, **caractérisé en ce que** la paroi filtrante (9) comporte un nombre d'au moins 400 orifices (15) de diamètre compris entre 100 et 500 µm, de préférence 300 µm.

4. Porte-filtre selon l'une des revendications 1 ou 2, **caractérisé en ce qu'**il comporte deux joints annulaires (10) agencés concentriquement à deux orifices d'écoulement (19), disposés de part et d'autre de l'axe de symétrie du fond (16).

5. Porte-filtre selon la revendication 4, **caractérisé en ce que** les deux joints annulaires (10) sont reliés ensemble par un support commun (12).

6. Porte-filtre selon l'une des revendications précédentes, **caractérisé en ce que** la paroi filtrante (9) présente des orifices (15') en correspondance avec le diamètre intérieur de la partie supérieure (11) du joint (10).

7. Porte-filtre selon la revendication 6, **caractérisé en ce que** le rapport entre la surface équivalente desdits orifices (15') et le diamètre intérieur du joint (10) est calculé de manière à minimiser le passage direct de l'infusion du récipient (7) à l'intérieur du joint (10) vers les orifices d'écoulement (19) lors de l'extraction du café.

8. Porte-filtre selon l'une des revendications précédentes, **caractérisé en ce que** le joint annulaire (10) est du type étagé comportant une base plane annulaire(12) continuée en sa partie supérieure par une partie généralement en forme de tore (11).

9. Porte filtre selon la revendication 8, **caractérisé en ce que** la valeur de l'épaisseur de la partie toroïdale (11) est inférieure ou égale à la hauteur du joint (10).

10. Porte-filtre selon l'une des revendications précédentes, **caractérisé en ce que** la partie supérieure (11) du joint (10) comporte une lèvre périphérique (11') sur son pourtour et qu'elle est orientée vers la partie intérieure du joint (10).

11. Porte-filtre selon l'une des revendications précédentes, **caractérisé en ce que** l'orifice d'écoulement (19) communique avec une tubulure (20) d'évacuation du café, ladite tubulure comportant au moins une chicane (23) au long de ses parois internes.

12. Porte-filtre selon la revendication 11, **caractérisé en ce que** la chicane (23) comporte une paroi agencée sensiblement perpendiculairement à la direction d'écoulement de l'infusion.

## Patentansprüche

1. Filterhalter für eine Kaffeemaschine vom Typ Espresso, mit einem Behälter (7), der zur Aufnahme des Kaffeemahlguts (8) bestimmt ist und dessen Boden (16) wenigstens eine Öffnung (19) zum Ablaufen des Kaffees aufweist, und über welchem sich eine Filterwand (9) zum Zurückhalten des Kaffeemahlguts (8) sowie wenigstens eine ringförmige Dichtung (10) aus Kunststoff erstreckt, die zwischen der Filterwand (9) und dem Boden (16) liegt, **dadurch gekennzeichnet, daß** die Filterwand (9) mehrere Öffnungen (15) mit einem Durchmesser aufweist, der dazu geeignet ist, die sehr feinen Mahlgutkörner zurückzuhalten, und daß die Dichtung (10) um jede Ablauföffnung (19) angeordnet ist, wobei der untere Teil (12) der Dichtung mit dem Boden (16) fest verbunden ist, wobei der obere Teil (11) der Dichtung normalerweise derart in Anlage gegen die Filterwand (9) ist, daß der Durchgang für die Flüssigkeit verschlossen ist, die das Mahlgut zu der Ablauföffnung (19) hin durchquert, wobei sich die Dichtung bei einem vorbestimmten Wert des Drucks der Flüssigkeit durch Kompression im wesentlichen senkrecht zu der Filterwand (9) verformt, so daß der Durchgang der Flüssigkeit zu der Ablauföffnung (19) hin geöffnet ist.

2. Filterhalter nach Anspruch 1, **dadurch gekennzeichnet**, **dadurch gekennzeichnet, daß** die Dichtung (10) eine Shorehärte zwischen 50 und 80 aufweist.

3. Filterhalter nach Anspruch 1, **dadurch gekennzeichnet, daß** die Filterwand (9) eine Anzahl von wenigstens 400 Öffnungen (15) mit einem Durchmesser aufweist, der zwischen 100 und 500 µm liegt und bevorzugt 300 µm beträgt.

4. Filterhalter nach einem der Ansprüche 1 oder 2, **dadurch gekennzeichnet, daß** er zwei ringförmige Dichtungen (10) aufweist, die konzentrisch zu zwei Ablauföffnungen (19) angeordnet sind, die beiderseits der Symmetrieachse des Bodens (16) angeordnet sind.

5. Filterhalter nach Anspruch 4, **dadurch gekennzeichnet, daß** die beiden ringförmigen Dichtungen (10) durch einen gemeinsamen Träger (12) miteinander verbunden sind.

6. Filterhalter nach einem der vorhergehenden Ansprüche, **dadurch gekennzeichnet, daß** die Filterwand (9) Öffnungen (15') in Entsprechung zu dem Innendurchmesser des oberen Teils (11) der Dichtung (10) aufweist.

7. Filterhalter nach Anspruch 6, **dadurch gekennzeichnet, daß** das Verhältnis zwischen der äquivalenten Oberfläche der Öffnungen (15') und dem Innendurchmesser der Dichtung (10) derart berechnet ist, daß der direkte Durchgang des Aufgusses von dem Behälter (7) im Inneren der Dichtung (10) zu den Ablauföffnungen (19) bei der Extraktion des Kaffees minimiert ist.

8. Filterhalter nach einem der vorhergehenden Ansprüche, **dadurch gekennzeichnet, daß** die ringförmige Dichtung (10) vom abgestuften Typ ist, wobei sie eine flache ringförmige Basis (12) aufweist, die in ihrem oberen Teil durch einen allgemein wulstförmigen Teil (11) fortgesetzt ist.

9. Filterhalter nach Anspruch 8, **dadurch gekennzeichnet, daß** der Wert der Dicke des toroiden Teils (11) weniger als oder gleich der Höhe der Dichtung (10) ist.

10. Filterhalter nach einem der vorhergehenden Ansprüche, **dadurch gekennzeichnet, daß** der obere Teil (11) der Dichtung (10) an seinem Umfang eine peripherische Lippe (11') aufweist, und daß er zu dem unteren Teil der Dichtung (10) gerichtet ist.

11. Filterhalter nach einem der vorhergehenden Ansprüche, **dadurch gekennzeichnet, daß** die Ablauföffnung (19) mit einem Stutzen (20) zum Ausbringen des Kaffees in Verbindung steht, wobei der Stutzen entlang seiner Innenwände wenigstens ein Ablenkblech (23) aufweist.

12. Filterhalter nach Anspruch 11, **dadurch gekennzeichnet, daß** das Ablenkblech (23) eine Wand aufweist, die im wesentlichen senkrecht zu der Ablaufrichtung des Aufgusses ist.

## Claims

1. A filter-carrier for an espresso type coffee-maker, said filter-carrier comprising a receptacle (7) designed to receive ground coffee (8), said receptacle having a bottom (16) that includes at least one orifice (19) through which coffee can flow out and above which a filtering wall (9) extends so as to retain the ground coffee, and at least one annular gasket (10) made of resilient material situated between the filtering wall (9) and said bottom (16), the filter-carrier being **characterized in that** said filtering wall (9) includes a plurality of orifices (15) of diameter suitable for retaining very fine grains of ground coffee, and **in that** said gasket (10) is arranged around each flow orifice (19), the bottom portion (12) of the gasket being secured to the bottom (16), the top portion (11) of the gasket normally bearing against the filtering wall (9) in such a manner as to prevent the liquid that is passing through the ground coffee from passing to the flow orifice (19), said gasket being deformed at a predetermined value for the pressure of the liquid by compressing substantially perpendicularly to the filtering wall (9) in such a manner as to allow the liquid to pass to the flow orifice (19).

2. A filter-carrier according to claim 1, **characterized in that** the gasket (10) presents hardness on the Shore scale lying in the range 50 to 80.

3. A filter-carrier according to claim 1, **characterized in that** the filtering wall (9) includes at least four hundred orifices (15) of diameter lying in the range 100 µm to 500 µm, and preferably being 300 µm.

4. A filter-carrier according to claim 1 or claim 2, **characterized in that** it includes two annular gaskets (10) arranged concentrically around a respective one of two flow orifices (19), and disposed on either side of the axis of symmetry of the bottom (16).

5. A filter-carrier according to claim 4, **characterized in that** the two annular gaskets (10) are connected together by a common support (12).

6. A filter-carrier according to any preceding claim, **characterized in that** the filtering wall (9) presents orifices (15') in correspondence with the inside diameter of the top portion (11) of the gasket (10).

7. A filter-carrier according to claim 6, **characterized in that** the ratio between the equivalent surface area of said orifices (15') and the inside diameter of the gasket (10) is calculated in such a manner as to minimize the amount of infusion that passes directly from the receptacle (7) to the inside of the gasket (10) towards the flow orifices (19) while the coffee is being extracted.

8. A filter-carrier according to any preceding claim, **characterized in that** the annular gasket (10) is of the stepped type including an annular plane base (12) extended at its top portion by a generally toroidally-shaped portion (11).

9. A filter-carrier according to claim 8, **characterized in that** the thickness of the toroidal portion (11) is not greater than the height of the gasket (10).

10. A filter-carrier according to any preceding claim, **characterized in that** the top portion (11) of the gasket (10) includes a peripheral lip (11') around its periphery, and **in that** it is pointed towards the inside portion of the gasket (10).

11. A filter-carrier according to any preceding claim, **characterized in that** the flow orifice (19) communicates with a coffee outlet tube (20), said tube including at least one baffle along its inside walls.

12. A filter-carrier according to claim 11, **characterized in that** the baffle (23) comprises a wall arranged substantially perpendicularly to the flow direction of the infusion.
